# EUROPÄISCHE PATENTANMELDUNG

(11) **EP 4 467 365 A1**
(43) Veröffentlichungstag der Anmeldung: **27.11.2024**
(21) Anmeldenummer: 24164333.7
(22) Anmeldetag: 19.03.2024
(51) Int. Cl.: B60G 11/28, B62D 61/12, F16F 9/05, F16F 9/58

(54) **LUFTFEDER FÜR EINE LUFTFEDERACHSE UND PUFFERELEMENT**

(30) Priorität: 05.05.2023 DE 102023111790
(71) Anmelder: BPW Bergische Achsen Kommanditgesellschaft, 51674 Wiehl (DE)
(72) Erfinder: Michels, Manfred, 53797 Lohmar (DE); Hasenburg, Lisa, 51647 Gummersbach (DE)
(74) Vertreter: DREISS Patentanwälte PartG mbB

(57) **Zusammenfassung**

Gegenstand der Erfindung ist eine Luftfeder (100) für eine Luftfederachse (200) und ein Pufferelement (122).

## Beschreibung

Die Erfindung betrifft eine Luftfeder für eine Luftfederachse, mit einem auf einem Längslenker abgestützten Tauchkolben, einem über einen Boden an dem Längslenker befestigten, in den Tauchkolben hineinragenden Stützbauteil, wobei der Tauchkolben und das Stützbauteil voneinander getrennte, auseinanderbewegbare Bauteile sind, einer an dem Tauchkolben angeordneten Zentriervorrichtung zum Einführen des Stützbauteils in den Tauchkolben, welche eine erste Zentrierfläche und eine sich an die erste Zentrierfläche anschließende zweite Zentrierfläche aufweist, und einem an der Zentriervorrichtung angeordneten Pufferelement, welches eine konkav geformte Anlagefläche zur Anlage eines Kopfbereiches des Stützbauteils bei entlüfteter Luftfeder aufweist. Die Erfindung betrifft auch ein Pufferelement, zur Anordnung an einer Zentriervorrichtung einer Luftfeder, wobei das Pufferelement eine konkav geformte Anlagefläche zur Anlage eines Kopfbereiches eines Stützbauteils der Luftfeder bei entlüfteter Luftfeder aufweist.

Eine derartige Luftfeder ist beispielsweise aus der DE 296 15 901 U1 bekannt. Diese Luftfedern haben sich im normalen Fahrbetrieb sowie bei der Kran- und Bahnverladung bewährt, da bei dieser geteilten Ausbildung von Tauchkolben und Stützbauteil im Verladezustand das Gewicht der Achse nicht an dem Rollbalg hängt und so vom Gewicht der Achse aus seiner Einbindung am Deckel oder Tauchkolben herausgezogen werden kann.

An der Zentriervorrichtung ist ein Pufferelement angeordnet, welches eine konkav geformte Anlagefläche zur Anlage eines Kopfbereiches des Stützbauteils bei entlüfteter Luftfeder aufweist. Diese Anlagefläche ist ausgehend von einem Boden des Stützbauteils, wobei der Boden als Bodenplatte ausgebildet sein kann, höher als die Schwenkachse des Längslenkers angeordnet. Dadurch kann es vorkommen, dass bei einem Einschwenken des Stützbauteils in den Tauchkolben der Kopfbereich des Stützbauteils nicht unmittelbar an das Pufferelement, sondern zunächst an die Zentriervorrichtung anstößt und diese ausbeult oder sogar zerstört, da die Zentriervorrichtung selber eine geringe Wandstärke aufweist und damit leicht deformierbar ist.

Der Erfindung liegt daher die Aufgabe zu Grunde, Beschädigungen insbesondere im Bereich der Zentriervorrichtung der Luftfeder zu verhindern.

Die Aufgabe wird erfindungsgemäß mit den Merkmalen der unabhängigen Ansprüche 1 und 16 gelöst. Zweckmäßige Ausgestaltungen und vorteilhafte Weiterbildungen der Erfindung sind in den Unteransprüchen angegeben.

Die Luftfeder bzw. das Pufferelement zeichnet sich erfindungsgemäß dadurch aus, dass das Pufferelement einen Randabschnitt aufweist, welcher wenigstens abschnittsweise einen Übergangsbereich zwischen der ersten Zentrierfläche und der zweiten Zentrierfläche überdeckt.

Durch den Randabschnitt kann sich das Pufferelement nunmehr weiter in Richtung des Bodens erstrecken, so dass das Pufferelement nunmehr nicht mehr ausschließlich im Bereich der ersten, insbesondere kegelstumpfförmigen Zentrierfläche der Zentriervorrichtung angeordnet ist, sondern sich über die erste Zentrierfläche hinaus in Richtung der zweiten, insbesondere ebenfalls kegelstumpfförmigen Zentrierfläche erstreckt. Die erste Zentrierfläche ist dabei dem Boden ferngelegen und die zweite Zentrierfläche dem Boden nähergelegen angeordnet. Die Randabschnitt ist dabei derart ausgebildet und angeordnet, dass dieser den Übergangsbereich zwischen der ersten Zentrierfläche und der zweiten Zentrierfläche überdeckt.

Dabei kann vorgesehen sind, dass die erste Zentrierfläche wenigstens abschnittsweise zylinderförmig der kegelstumpfförmig ausgebildet ist und/oder dass die zweiten Zentrierfläche wenigstens abschnittsweise kegelstumpfförmig ausgebildet ist.

Bevorzugt ist die erste Zentrierfläche kegelstumpfförmige und verläuft in einem anderen Neigungswinkel als die zweite, bevorzugt ebenfalls kegelstumpfförmig ausgebildete Zentrierfläche, so dass der Übergangsbereich zwischen diesen beiden Zentrierflächen einen Knick aufweist. Insbesondere dieser Knick, welcher besonders gefährdet für mögliche Deformationen durch das Stützbauteil bei Einführen in den Tauchkolben ist, kann nun durch den Randabschnitt des Pufferelements überdeckt und damit geschützt werden.

Durch diesen den Übergangsbereich überdeckenden Randabschnitt kann in diesem Bereich eine Materialverdickung bzw. Materialverstärkung ausgebildet werden, welche die Gefahr einer Deformation oder gar Zerstörung der Zentriervorrichtung deutlich reduzieren kann. Der Randabschnitt erstreckt sich vorzugsweise radial nach außen von der konkav geformten Anlagefläche des Pufferelements. Der Randabschnitt kann eine sich nach radial außen erstreckende Verlängerung der Anlagefläche des Pufferelements ausbilden. Der Randabschnitt erstreckt sich ausgehend von der Anlagefläche des Pufferelements in Richtung des Bodens. Der Randabschnitt bildet eine Art verlängerten Kragen des Pufferelements aus. Der Randabschnitt erstreckt sich vorzugsweise über die gesamte Umfangsfläche des Pufferelements. Der Randabschnitt kann an einen die konkav geformte Anlagefläche aufweisenden Hauptkörper des Pufferelements angebunden sein. Das Pufferelement kann dadurch entlang seiner Länge bzw. entlang seiner Längsachse aus zwei Abschnitten, dem Hauptkörper und dem Randabschnitt, ausgebildet sein.

Vorteilhafterweise überdeckt der Randabschnitt mehr als die Hälfte des Übergangsbereichs oder auch den gesamten Übergangsbereich.

Bevorzugt erstreckt sich der Randabschnitt über den Übergangsbereich hinaus bis hin zu der zweiten Zentrierfläche. Der Randabschnitt kann dann nicht nur den Übergangsbereich überdecken, sondern auch einen Teilbereich der zweiten Zentrierfläche überdecken. Hierdurch kann die Zentriervorrichtung noch stabiler gegenüber einer von dem Stützbauteil auf die Zentriervorrichtung wirkenden Druckkraft ausgebildet sein.

Der Randabschnitt weist bevorzugt eine sich in Richtung des Bodens aufweitende Ringfläche auf. Die Ringfläche zeigt vorzugsweise in Richtung des Stützbauteils. Mit der Ringfläche kann der Ringabschnitt unmittelbar an die konkav geformte Anlagefläche des Pufferelements anschließen bzw. angrenzen. Die Ringfläche erstreckt sich ausgehend von der konkav geformten Anlagefläche in Richtung des Bodens. Die Ringfläche ist dabei bevorzugt derart geformt, dass sich der Durchmesser der Ringfläche in Richtung Boden vergrößert, so dass sich der Randabschnitt in Richtung des Bodens aufweiten kann. Im Bereich der Ringfläche kann der Stützabschnitt beim Einführen in den Tauchkolben gegen den Randabschnitt des Pufferelements stoßen.

Vorzugsweise kann sich die Ringfläche des Randabschnitts derart in Richtung des Bodens aufweiten, dass relativ zu einer Längsachse des Pufferelements ein Öffnungswinkel der Ringfläche kleiner ist als ein Öffnungswinkel der Anlagefläche. Durch die beiden unterschiedlichen Öffnungswinkel ist im Bereich des Übergangs zwischen der Anlagefläche und der Ringfläche ein Knick ausgebildet. Die Ringfläche kann damit eine andere Neigung bzw. einen anderen Neigungsgrad als die Anlagefläche aufweisen.

Um die Führung des Stützbauteils, insbesondere des Kopfbereiches des Stützbauteils, auf das Pufferelement beim Einführen in den Tauchkolben und damit in die Zentriervorrichtung zu verbessern, kann der Randabschnitt eine abgerundet ausgebildete Kantenfläche aufweisen. Die abgerundet ausgebildete Kantenfläche ist an einem freien Ende des Randabschnitts ausgebildet. Durch die Abrundung kann das Stützbauteil gezielt auf das Pufferelement geführt bzw. geleitet werden. Die Abrundung kann damit eine Art Einführschräge für das Stützbauteil in den Bereich des Pufferelements ausbilden. Durch die Abrundung weist die Kantenfläche des Randabschnitts einen Radius auf.

Das Pufferelement kann eine erste, im Bereich der ersten Zentrierfläche angeordnete Außenumfangsfläche und an dem Randabschnitt eine sich an die erste Außenumfangsfläche anschließende zweite Außenumfangsfläche aufweisen, wobei die erste Außenumfangsfläche einen Neigungswinkel relativ zu der Längsachse des Pufferelements aufweisen kann, welcher kleiner sein kann als ein Neigungswinkel der zweiten Außenumfangsfläche relativ zu der Längsachse des Pufferelements. Vorteilhaft ist, wenn dass der erste Neigungswinkel im Bereich von 0° und 15° und der zweite Neigungswinkel im Bereich von 10° und 45° liegt. Damit kann sich die äußere Formgebung des Pufferelements an seiner Außenumfangsfläche entlang seiner Länge verändern. Die äußere Formgebung des Pufferelements ist vorzugsweise an die Formgebung der ersten Zentrierfläche, an die Formgebung des Übergangsbereichs und an die Formgebung der zweiten Zentrierfläche angepasst. Die erste Außenumfangsfläche kann sich parallel zu der ersten Zentrierfläche erstrecken und die zweite Außenumfangsfläche kann sich parallel zu dem Übergangsbereich und insbesondere parallel zu der zweiten Zentrierfläche erstrecken. Das Pufferelement kann damit mit seiner ersten und seiner zweiten Außenumfangsfläche dem Verlauf der beiden Zentrierflächen und des Übergangsbereichs folgen. Das Pufferelement ist mit seinen beiden Außenumgangsflächen vorzugsweise jeweils sehr dicht an den Zentrierflächen und dem Übergangsbereich angeordnet, so dass möglichst kein oder nur ein sehr geringer Spalt dazwischen ausgebildet ist. Ein Spiel zwischen dem Pufferelement und der Zentriervorrichtung kann damit vermieden werden.

Das Pufferelement kann mittig der Anlagefläche eine Ausnehmung aufweisen, wobei die Ausnehmung die Form eines Sechskants aufweisen kann. Die Ausnehmung kann zur Aufnahme einer Befestigungsmutter dienen, um das Pufferelement über eine Schraubverbindung an der Zentriervorrichtung zu befestigen.

Zur Aufnahme einer Befestigungsschraube kann das Pufferelement eine sich entlang der Längsachse des Pufferelements erstreckende Durchgangsöffnung aufweisen, wobei zumindest bereichsweise die Durchgangsöffnung ein Innengewinde aufweisen kann. Die Befestigungsschraube kann in das Innengewinde der Durchgangsöffnung des Pufferelements eingeschraubt sein.

An einer in Richtung Tauchkolben zeigenden Oberseite des Pufferelements kann ein ringförmig ausgebildeter Vorsprung ausgebildet sein. Über den Vorsprung kann eine formschlüssige Verbindung des Pufferelements mit der Zentriervorrichtung ausgebildet sein, indem das Pufferelement mit dem ringförmig ausgebildeten Vorsprung in eine mittig der Zentriervorrichtung ausgebildete Öffnung eingreifen kann.

Das Pufferelement ist bevorzugt derart ausgebildet, dass dieses sich im Bereich der ersten Zentrierfläche über die gesamte Breite und die gesamte Länge der Zentriervorrichtung erstreckt. Das Pufferelement kann damit einen von der ersten Zentrierfläche begrenzten Bereich der Zentriervorrichtung vollständig bzw. nahezu vollständig ausfüllen.

Das Pufferelement ist bevorzugt aus einem Metallmaterial ausgebildet. Das Metallmaterial kann beispielsweise ein Stahlmaterial sein.

Das Pufferelement kann auf unterschiedliche Art und Weise hergestellt sein. Beispielsweise kann das Pufferelement geschmiedet, gesintert, gegossen oder gedreht sein.

Nachfolgend wird die Erfindung unter Bezugnahme auf die anliegenden Zeichnungen anhand einer bevorzugten Ausgestaltung näher erläutert. Es zeigen
- Fig. 1: eine Darstellung einer Luftfederachse mit einer Luftfeder gemäß der Erfindung in einem normalen Fahrbetrieb,
- Fig. 2: eine geschnittene Darstellung der in Fig. 1 gezeigten Luftfeder in einer vergrößerten Ansicht,
- Fig. 3: eine geschnittene Darstellung der in Fig. 2 gezeigten Luftfeder ohne Stützbauteil,
- Fig. 4: eine Schnittdarstellung des Tauchkolbens zusammen mit der Zentriervorrichtung und dem Pufferelement,
- Fig. 5: eine Darstellung des Pufferelements,
- Fig. 6: eine Schnittdarstellung des in Fig. 5 gezeigten Pufferelements, und
- Fig. 7: eine Schnittdarstellung einer weiteren Ausführungsform eines Pufferelements.

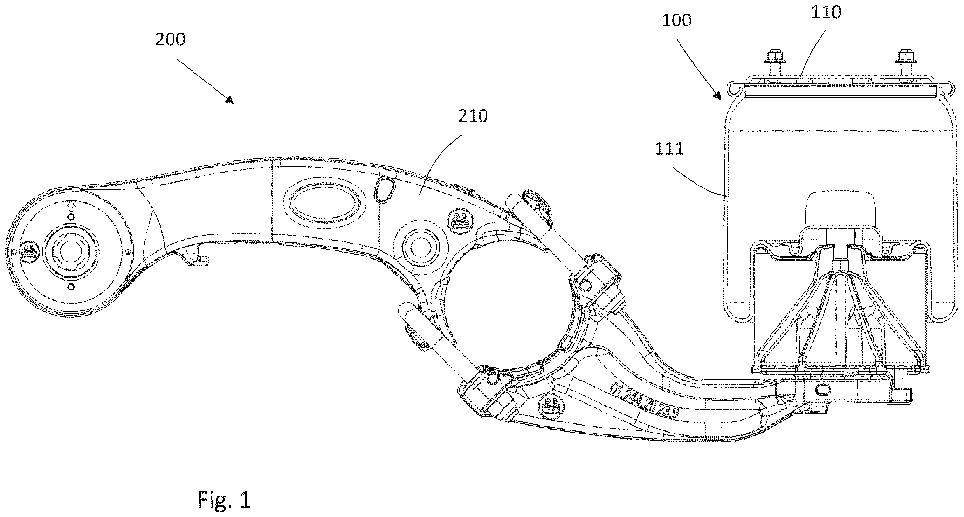

Fig. 1 zeigt eine Luftfederachse 200 mit einem Längslenker 210, an welchem eine Luftfeder 100 angeordnet ist.

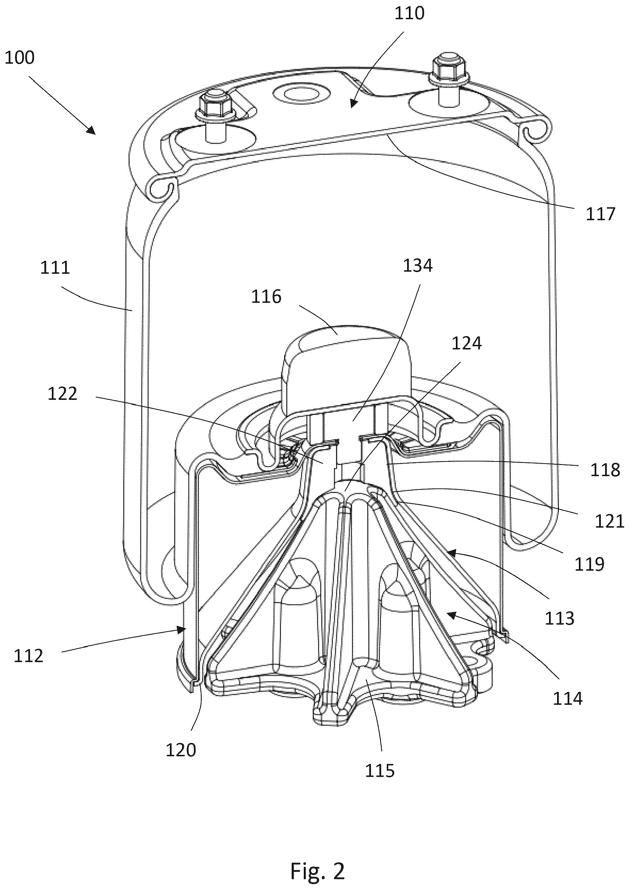

Die Luftfeder 100 ist vergrößert in Fig. 2 gezeigt. Sie weist einen Deckel 110 auf, über welchen die Luftfeder 100 an einem hier nicht gezeigten Fahrzeugrahmen befestigt werden kann. An dem Deckel 110 ist ein Rollbalg 111 befestigt. Weiter weist die Luftfeder 100 einen Tauchkolben 112 auf. Der Tauchkolben 112 ist außen zylindrisch und bildet dort eine Abrollfläche für den Rollbalg 111. Innen weist der Tauchkolben 112 die Form eines Zentrierkegels auf, der eine Zentriervorrichtung 113 bildet, wobei der zylindrische Teil und der kegelförmige Teil des Tauchkolbens fest miteinander verbunden sind.

Ferner ist Bestandteil der Luftfeder 100 ein Stützbauteil 114 auf. Das Stützbauteil 114 weist eine nach oben sich verjüngende Kegelform auf. Über einen als Bodenplatte ausgebildeten Boden 115 des Stützbauteils 114 ist das Stützbauteil 114 und damit indirekt die Luftfeder 100 auf dem Längslenker 210 befestigt, wie in Fig. 1 zu erkennen ist. Die Zentriervorrichtung 113 des Tauchkolbens 112 ermöglicht ein kontrolliertes Einführen des Stützbauteils 114 in den Tauchkolben 112 beim Absetzen des Fahrzeugs. Im Fahrbetrieb nimmt das Stützbauteil 114 die auftretenden Stützkräfte auf und leitet sie in den Längslenker 210 ab.

Oberhalb des Tauchkolbens 112 und damit zwischen dem Tauchkolben 112 und dem Deckel 110 ist ein elastischer Puffer 116 angeordnet, der sich bei entlüfteter Luftfeder 100 gegen eine in Richtung Tauchkolben 112 zeigende Innenseite 117 des Deckels 110 legt.

Die Zentriervorrichtung 113 weist in ihrem oberen Bereich eine erste Zentrierfläche 118 und eine sich an die erste kegelstumpfförmige Zentrierfläche 118 über einen Übergangsbereich 121 anschließende zweite kegelstumpfförmige Zentrierfläche 119 auf. Die erste Zentrierfläche 118 ist in den Figuren 1 bis 4 kegelstumpfförmig ausgebildet; allerdings ist auch denkbar, dass die erste Zentrierfläche vollständig oder zumindest abschnittsweise zylindrisch ausgebildet ist. Die zweite kegelstumpfförmige Zentrierfläche 119 erstreckt sich ausgehend von der ersten kegelstumpfförmigen Zentrierfläche 118 in Richtung Boden 115 und ist an ihrem unteren Ende 120 mit dem zylindrischen Teil des Tauchkolbens 112 verbunden, wie in Fig. 2 zu erkennen ist. Die obere, erste, in den Figuren 1 bis 4 kegelstumpfförmig ausgebildete Zentrierfläche 118 verläuft in einem anderen Neigungswinkel als die tiefer angeordnete, zweite kegelstumpfförmige Zentrierfläche 119, so dass der Übergangsbereich 121 zwischen diesen beiden Zentrierflächen 118, 119 einen gerundeten, nicht scharfkantigen Knick aufweist, wie ebenfalls in Fig. 2 zu erkennen ist.

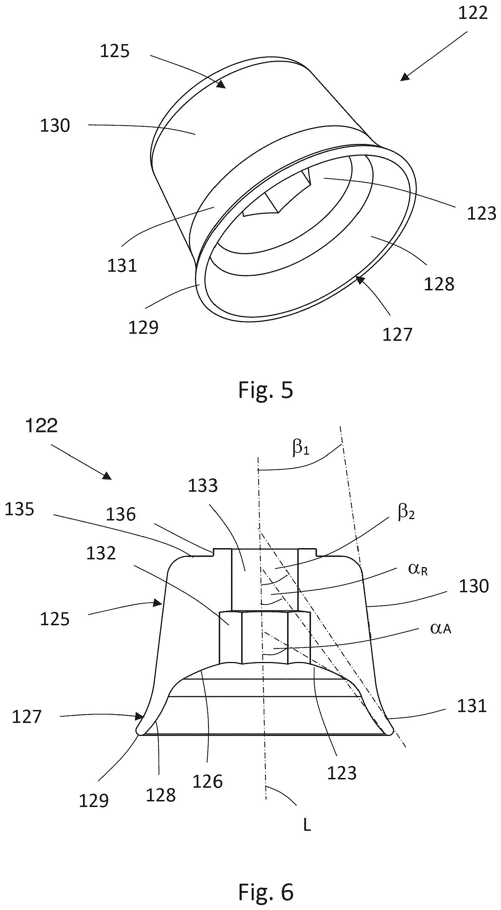

An der Zentriervorrichtung 113 ist in deren oberem Bereich ein Pufferelement 122 angeordnet, welches mit dem Stützbauteil 114 zusammenwirkt. Das Pufferelement 122 ist für sich alleine in Fig. 5 und 6 gezeigt.

Wie insbesondere in der Schnittdarstellung der Fig. 6 zu erkennen ist, weist das Pufferelement 122 eine konkav geformte Anlagefläche 123 auf, an welcher bei entlüfteter Luftfeder 100 ein Kopfbereich 124 des Stützbauteils 114 vorzugsweise flächig anliegen kann. Die konkav geformte Anlagefläche 123 ist an einem Hauptkörper 125 des Pufferelements 122 ausgebildet. Die konkav geformte Anlagefläche 123 ist an einer in Richtung Stützbauteil 114 gerichteten Unterseite 126 des Hauptkörpers 125 ausgebildet. Die radial äußere Radienkontur der Anlagefläche 123 ist korrespondierend mit der Anlagefläche 124 des Stützbauteils 114 derart ausgebildet, dass ein seitliches Verschieben orthogonal zur Achse L sicher unterbunden ist, wenn das Pufferelement 122 unter Gewichtlast des Fahrzeugaufbaus aufliegt.

Das Pufferelement 122 weist weiter einen Randabschnitt 127 auf. Dieser ist einstückig mit dem Hauptkörper 125 ausgebildet. Der Randabschnitt 127 bildet eine Verlängerung des Hauptkörpers 125 in Richtung des Bodens 115 aus. Der Randabschnitt 127 erstreckt sich radial umlaufend von der Unterseite 126 des Hautkörpers 125 weg. Der Randabschnitt 127 bildet eine Art radial umlaufende Lippe aus.

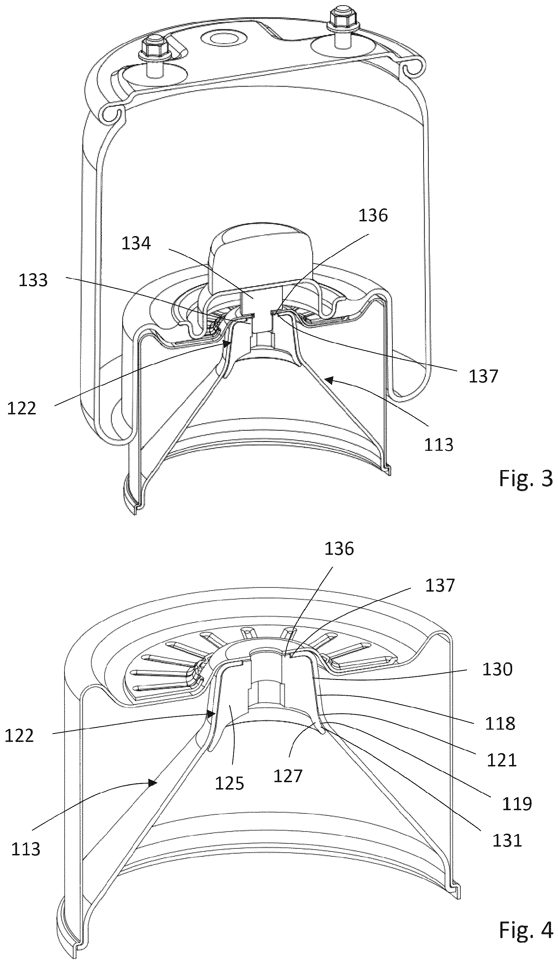

Durch den Randabschnitt 127 kann das Pufferelement 122 derart verlängert sein, dass das Pufferelement 122 nicht nur im Bereich der ersten Zentrierfläche 118 der Zentriervorrichtung 113 angeordnet ist, sondern auch den Übergangsbereich 121 von der ersten Zentrierfläche 118 zu der zweiten Zentrierfläche 119 wenigstens abschnittsweise und vorzugsweise vollständig überdeckt. Wie insbesondere auch in Fig. 4 zu erkennen ist, erstreckt sich der Randabschnitt 127 bis hin zu der zweiten Zentrierfläche 119, so dass auch ein zumindest kleiner Teil der zweiten Zentrierfläche 119 von dem Randabschnitt 127 des Pufferelements 122 überdeckt ist.

Der Randabschnitt 127 weist eine radial umlaufende Ringfläche 128 auf. Die Ringfläche 128 zeigt in Richtung des Kopfbereiches 124 des Stützbauteils 114, so dass bei einem Einführen des Kopfbereiches 124 des Stützbauteils 114 in den Tauchkolben 112 dieser an der Ringfläche 128 abgleiten kann und ausgehend von der Ringfläche 128 in Richtung der konkav geformten Anlagefläche 123 gleiten kann. Der Randabschnitt 127 bildet mit seiner Ringfläche 128 einen Art Fangkorb für den Kopfbereich 124 des Stützbauteils 114 beim Einschwenken in den Tauchkolben 112 aus.

Die Ringfläche 128 des Randabschnitts 127 schließt sich an die konkav geformte Anlagefläche 123 des Hauptkörpers 125 des Pufferelements 122 an. Die Ringfläche 128 bildet eine Verlängerung der Anlagefläche 123 in Richtung des Bodens 115 bzw. der Bodenplatte aus.

Im Gegensatz zu der Anlagefläche 123 ist die Ringfläche 128 jedoch nicht konkav geformt, sondern die Ringfläche 128 weitet sich in Richtung Boden 115 auf, so dass sich der Durchmesser der Ringfläche 128 und damit des Randabschnitts 127 ausgehend von dem Hauptkörper 125 in Richtung Boden 115 vergrößert. Wie insbesondere in Fig. 6 zu erkennen ist, kann die Ringfläche 128 im Gegensatz zu der Anlagefläche 123 eine konvexe Krümmung aufweisen.

Im Gegensatz zu dem Verlauf der Anlagefläche 123 ist die Ringfläche 128 derart geformt, dass relativ zu der Längsachse L des Pufferelements 122 ein Öffnungswinkel αR der Ringfläche 128 kleiner als ein Öffnungswinkel αA der Anlagefläche 123, wie in Fig. 6 zu erkennen, ist. Der Öffnungswinkel αA der Anlagefläche 123 ist größer als 45°, insbesondere 60° ≤ αA ≤ 85°. Der Öffnungswinkel αR der Ringfläche 128 beträgt 30° ≤ αR ≤ 55°.

Der Randabschnitt 127 weist an seinem freien Ende eine abgerundet ausgebildete Kantenfläche 129 auf. Die Kantenfläche 129 ist radial umlaufend ausgebildet. Durch die Abrundung bildet die Kantenfläche 129 eine Einführschräge für den Kopfbereich 124 des Stützbauteils 114 aus.

Das Pufferelement 122 weist eine sich entlang des Hauptkörpers 125 erstreckende erste Außenumfangsfläche 130 und eine sich entlang des Randabschnitts 127 erstreckende zweite Außenumfangsfläche 131 auf. Die beiden Außenumfangsflächen 130, 131 weisen einen unterschiedlichen Neigungswinkel auf. Die erste Außenumfangsfläche 130 weist einen Neigungswinkel β1 relativ zu der Längsachse L des Pufferelements 122 auf, welcher bei dem in der Figur 5 und 6 gezeigten Ausführungsbeispiel kleiner ist als ein Neigungswinkel β2 der zweiten Außenumfangsfläche 131 relativ zu der Längsachse L des Pufferelements 122.

Die äußere Formgebung des Pufferelements 122 ist damit an die Formgebung der ersten Zentrierfläche 118, an die Formgebung des Übergangsbereichs 121 und an die Formgebung der zweiten kegelstumpfförmigen Zentrierfläche 119 angepasst. Die erste Außenumfangsfläche 130 erstreckt sich parallel zu der ersten Zentrierfläche 118 und die zweite Außenumfangsfläche 131 erstreckt sich parallel zu dem Übergangsbereich 121 und parallel zu der zweiten kegelstumpfförmigen Zentrierfläche 119. Das Pufferelement 122 folgt damit mit seiner ersten und seiner zweiten Außenumfangsfläche 130, 131 dem Verlauf der beiden Zentrierflächen 118, 119 und des Übergangsbereichs 121. Wie in Fig. 4 zu erkennen ist, ist das Pufferelement 122 mit seinen beiden Außenumgangsflächen 130, 131 jeweils sehr dicht an den Zentrierflächen 118, 119 und dem Übergangsbereich 121 angeordnet, so dass möglichst kein oder nur ein sehr geringer Spalt dazwischen ausgebildet ist.

Das Pufferelement 122 ist derart ausgebildet, dass dieses sich im Bereich der ersten Zentrierfläche 118 über die gesamte Breite und die gesamte Länge der Zentriervorrichtung 113 erstreckt. Das Pufferelement 122 kann damit einen von der ersten Zentrierfläche 118 begrenzten Bereich der Zentriervorrichtung 113 vollständig ausfüllen, wie beispielsweise in Fig. 2, 3 und 4 zu erkennen ist.

Das Pufferelement 122 weist an seinem Hauptkörper 125 mittig der konkav geformten Anlagefläche 123 eine Ausnehmung 132 auf, welche bei der hier gezeigten Ausgestaltung die Form eines Sechskants aufweist.

Weiter weist das Pufferelement 122 an dem Hauptkörper 125 eine sich entlang der Längsachse L erstreckende Durchgangsöffnung 133 auf. Diese Durchgangsöffnung 133 weist zumindest bereichsweise ein Innengewinde auf, in welches eine Schraube 134, wie in Fig. 2 zu erkennen ist, eingeschraubt werden kann. Mittels der Schraube 134 kann das Pufferelement 122 an dem Tauchkolben 112 befestigt werden.

An einer in Richtung Puffer 116 zeigenden Oberseite 135 des Pufferelements 122 bzw. des Hauptkörpers 125 des Pufferelements 122 ist ein ringförmig ausgebildeter Vorsprung 136 ausgebildet. Über den Vorsprung 136 kann eine formschlüssige Verbindung des Pufferelements 122 mit der Zentriervorrichtung 113 ausgebildet werden, indem das Pufferelement 122 mit dem ringförmig ausgebildeten Vorsprung 136 in eine mittig der Zentriervorrichtung 113 ausgebildete Öffnung 137 eingreift, wie insbesondere in Fig. 3 zu erkennen ist.

Fig. 5 zeigt das Pufferelement 122 noch einmal in einer perspektivischen Ansicht. Wie in Fig. 5 und 6 zu erkennen ist, weist das Pufferelement 122 durch den Hauptkörper 125 und durch den zusätzlich an dem Hauptkörper 125 ausgebildeten Randabschnitt 127 eine Glockenform auf, welche die Ausbildung eines großen Fangdurchmessers des Pufferelements 122 für den Kopfbereich 124 des Stützbauteils 114 ermöglicht. Zudem ermöglicht der nunmehr zusätzlich vorgesehene Randabschnitt 127 auch im Betrieb bei entlüfteter Luftfeder 100 einen sicheren Seitenhalt des Stützbauteils 114 an dem Pufferelement 122 und damit in der Zentriervorrichtung 113.

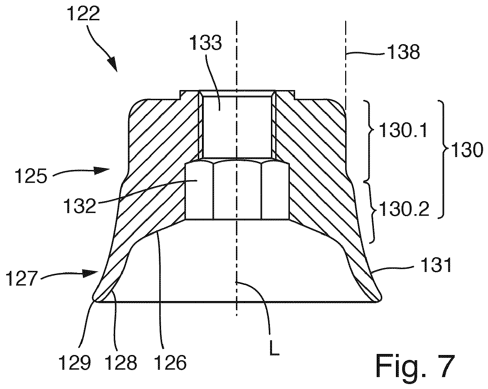

In der Figur 7 ist ein Pufferelement 122 gezeigt, dass im Wesentlichen dem Pufferelement 122, wie es in Figur 6 gezeigt ist, entspricht. Entsprechende Bauteile und Abschnitte sind mit entsprechenden Bezugszeichen gekennzeichnet. Das Pufferelement 122 nach Figur 7 unterscheidet sich insbesondere vom Pufferelement 122 nach Figur 6 dadurch, dass die erste Außenumfangsfläche 130 einen ersten, dem Randabschnitt 127 ferngelegenen zylinderförmigen Abschnitt 130.1 und einen sich daran anschließenden, zweiten, dem Randabschnitt 127 näher gelegenen kegelförmigen Abschnitt 130.2 umfasst. Der Abschnitt 130.1 der ersten Außenumfangsfläche 130 schließt damit einen Neigungswinkel β1 relativ zu der Längsachse L von 0° ein bzw. verläuft wenigstens weitgehend parallel zur Längsachse L; vergleiche dazu die parallel zur Längsachse L verlaufende, als gestrichelte Linie 138 angedeutete Außenkontur des Abschnitts 130.1. Denkbar ist ebenfalls, dass die erste Außenumfangsfläche 130 weitere zusätzliche Abschnitte aufweist oder auch, dass sie vollständig zylinderförmig ausgebildet ist.

### Bezugszeichenliste

- 100: Luftfeder
- 110: Deckel
- 111: Rollbalg
- 112: Tauchkolben
- 113: Zentriervorrichtung
- 114: Stützbauteil
- 115: Boden/ Bodenplatte
- 116: Puffer
- 117: Innenseite
- 118: Erste Zentrierfläche
- 119: Zweite Zentrierfläche

- 120: Freies Ende
- 121: Übergangsbereich
- 122: Pufferelement
- 123: Anlagefläche
- 124: Kopfbereich
- 125: Hauptkörper
- 126: Unterseite
- 127: Randabschnitt
- 128: Ringfläche
- 129: Kantenfläche

- 130: Erste Außenumfangsfläche
- 131: Zweite Außenumfangsfläche
- 132: Ausnehmung
- 133: Durchgangsöffnung
- 134: Schraube
- 135: Oberseite
- 136: Vorsprung
- 137: Öffnung
- 138: Außenkontur von 130.1

- 200: Luftfederachse
- 210: Längslenker

- L: Längsachse
- αA: Öffnungswinkel Anlagefläche
- αR: Öffnungswinkel Ringfläche
- β1: Neigungswinkel erste Außenumfangsfläche
- β2: Neigungswinkel zweite Außenumfangsfläche

## Patentansprüche

1. Luftfeder (100) für eine Luftfederachse (200),
mit einem auf einem Längslenker (210) abgestützten Tauchkolben (112),
mit einem an dem Längslenker (210) befestigten, in den Tauchkolben (112) hineinragenden Stützbauteil (114), wobei das Stützbauteil (114) einen Kopfbereich (124) und einen Boden (115) umfasst,
wobei der Tauchkolben (112) und das Stützbauteil (114) voneinander getrennte, auseinanderbewegbare Bauteile sind,
mit einer an dem Tauchkolben (112) angeordneten Zentriervorrichtung (113) zum Einführen des Stützbauteils (114) in den Tauchkolben (112), welche eine erste Zentrierfläche (118) und eine sich an die erste Zentrierfläche (118) anschließende zweite Zentrierfläche (119) aufweist, und
mit einem an der Zentriervorrichtung (113) angeordneten Pufferelement (122), welches eine konkav geformte Anlagefläche (123) zur Anlage des Kopfbereiches (124) des Stützbauteils (114) bei entlüfteter Luftfeder (100) aufweist,
**dadurch gekennzeichnet, dass** das Pufferelement (122) einen Randabschnitt (127) aufweist, welcher wenigstens abschnittsweise einen Übergangsbereich (121) zwischen der ersten Zentrierfläche (118) und der zweiten Zentrierfläche (119) überdeckt.

2. Luftfeder (100) nach Anspruch 1, **dadurch gekennzeichnet, dass** der Randabschnitt (127) zumindest die dem Bodenbereich (115) ferngelegene, obere Hälfte des Übergangsbereichs (121) oder den gesamten Übergangsbereich (121) überdeckt.

3. Luftfeder (100) nach Anspruch 1 oder 2, **dadurch gekennzeichnet, dass** sich der Randabschnitt (127) über den Übergangsbereich (121) hinaus bis hin zu der zweiten Zentrierfläche (119) erstreckt.

4. Luftfeder (100) nach Anspruch 1, 2 oder 3, **dadurch gekennzeichnet, dass** die erste Zentrierfläche (118) wenigstens abschnittsweise zylinderförmig der kegelstumpfförmig ausgebildet ist und/oder dass die zweiten Zentrierfläche (119) wenigstens abschnittsweise kegelstumpfförmig ausgebildet ist.

5. Luftfeder (100) nach einem der Ansprüche 1 bis 4, **dadurch gekennzeichnet, dass** der Randabschnitt (127) eine sich in Richtung des Bodens (115) aufweitende Ringfläche (128) aufweist.

6. Luftfeder (100) nach Anspruch 5, **dadurch gekennzeichnet, dass** relativ zu einer Längsachse (L) des Pufferelements (122) ein Öffnungswinkel (αR) der Ringfläche (128) kleiner ist als ein Öffnungswinkel (αA) der Anlagefläche (123).

7. Luftfeder (100) nach einem der Ansprüche 1 bis 6, **dadurch gekennzeichnet, dass** der Randabschnitt (127) eine abgerundet ausgebildete Kantenfläche (129) aufweist.

8. Luftfeder (100) nach einem der Ansprüche 1 bis 7, **dadurch gekennzeichnet, dass** das Pufferelement (122) wenigstens eine erste, im Bereich der ersten Zentrierfläche (118) angeordnete Außenumfangsfläche (130) und an dem Randabschnitt (127) eine sich an die erste Außenumfangsfläche (130) anschließende zweite Außenumfangsfläche (131) aufweist, wobei die erste Außenumfangsfläche (130) einen ersten Neigungswinkel (β1) relativ zu der Längsachse (L) des Pufferelements (122) aufweist, welcher kleiner ist als ein zweiter Neigungswinkel (β2) der zweiten Außenumfangsfläche (131) relativ zu der Längsachse (L) des Pufferelements (122) .

9. Luftfeder (100) nach Anspruch 8, **dadurch gekennzeichnet, dass** der erste Neigungswinkel (β1) im Bereich von 0° und 15° und der zweite Neigungswinkel (β2) im Bereich von 10° und 45° liegt.

10. Luftfeder (100) nach einem der Ansprüche 1 bis 9, **dadurch gekennzeichnet, dass** das Pufferelement (122) mittig der Anlagefläche (123) eine Ausnehmung (132) aufweist, wobei die Ausnehmung (132) vorzugsweise die Form eines Sechskants aufweist.

11. Luftfeder (100) nach einem der Ansprüche 1 bis 10, **dadurch gekennzeichnet, dass** das Pufferelement (122) eine sich entlang der Längsachse (L) erstreckende Durchgangsöffnung (133) aufweist, wobei zumindest bereichsweise die Durchgangsöffnung (133) ein Innengewinde aufweist.

12. Luftfeder (100) nach einem der Ansprüche 1 bis 11, **dadurch gekennzeichnet, dass** an einer in Richtung Tauchkolben (112) zeigenden Oberseite (135) des Pufferelements (122) ein ringförmig ausgebildeter Vorsprung (136) ausgebildet ist.

13. Luftfeder (100) nach einem der Ansprüche 1 bis 12, **dadurch gekennzeichnet, dass** sich das Pufferelement (122) im Bereich der ersten Zentrierfläche (118) über die gesamte Breite und die gesamte Länge der Zentriervorrichtung (113) erstreckt.

14. Luftfeder (100) nach einem der Ansprüche 1 bis 13, **dadurch gekennzeichnet, dass** das Pufferelement (122) aus einem Metallmaterial ausgebildet ist.

15. Luftfeder (100) nach Anspruch 14, **dadurch gekennzeichnet, dass** das Pufferelement (122) geschmiedet, gesintert, gegossen oder gedreht ist.

16. Pufferelement (122) zur Anordnung an einer Zentriervorrichtung (113) einer Luftfeder (100), insbesondere einer Luftfeder (100) nach einem der vorhergehenden Ansprüche, wobei das Pufferelement (122) eine konkav geformte Anlagefläche (123) zur Anlage eines Kopfbereiches (124) eines Stützbauteils (114) der Luftfeder (100) bei entlüfteter Luftfeder (100) aufweist, **dadurch gekennzeichnet, dass** das Pufferelement (122) einen Randabschnitt (127) aufweist, der im montierten Zustand des Pufferelements (122) einen Übergangsbereich (121) der Zentriervorrichtung (113) überdeckt, wobei der Übergangsbereich (121) zwischen einer ersten Zentrierfläche (118) und einer zweiten Zentrierfläche (119) der Zentriervorrichtung (113) liegt.

17. Pufferelement (122) nach Anspruch 16, **dadurch gekennzeichnet, dass** der Randabschnitt (127) im montierten Zustand zumindest die dem Bodenbereich (115) ferngelegene, obere Hälfte des Übergangsbereichs (121) oder den gesamten Übergangsbereich (121) überdeckt.
